# EUROPEAN PATENT APPLICATION

(11) **EP 4 393 580 A1**
(43) Date of publication of application: **03.07.2024**
(21) Application number: 23218811.0
(22) Date of filing: 20.12.2023
(51) Int. Cl.: B01J 2/12, B01J 8/10, B01J 19/28

(54) **GRANULATING APPARATUS FOR PRODUCING GRANULES BY AGGLOMERATION**

(30) Priority: 30.12.2022 IT 202200027357
(71) Applicant: L.B. Officine Meccaniche S.p.A., 41042 Fiorano Modenese (Modena) (IT)
(72) Inventor: CAVANI, Giuseppe, 41043 Formigine, Modena (IT); FANTI, Corrado, 42123 Reggio Emilia (IT)
(74) Representative: Luppi Intellectual Property S.r.l.

(57) **Abstract**

A granulating apparatus (10) for producing granules by agglomeration of powder material comprises a drum (12) extending along, and actuatable in rotation around, a horizontal axis (X), a first wall (13) and a second wall (14); the second wall (14) is arranged at a second end (12") of the drum (12) and it is fixed with respect to the rotation of the drum (12), the first wall (13), instead, is movable along the horizontal axis (X), with respect to the drum (12), between a working position (PL), in which the drum (12), the first wall (13) and the second wall (14) define a granulating chamber (11), and a cleaning position (PP), in which the first wall (13) is far from the drum (12), therefore allowing access into the granulating chamber (11).

## Description

### Background of the invention

The present invention relates to a granulating apparatus for producing granules by agglomeration of powder material, in particular for producing ceramic microgranules used for forming ceramic tiles. The present invention may be applied both in the ceramic industry and in other industries such as, for example, in the production of fertilizers, pet-food, et cetera.

### State of the art

Granulating apparatuses for the agglomeration of granules comprising a granulating chamber that is cylindrical-shaped and rotatable around its longitudinal axis, inside which there is provided a dispersing element which rotates in the same direction as the granulating chamber or in the opposite direction, are known.

In particular, the material is introduced into the granulating chamber driven in rotation before receiving a fluid, such as water or slip, from a fluid dispensing element; the combination of dispersing element and dispensing element allows to obtain an agglomeration limiting the maximum size of the microgranules.

In such known apparatuses, the granulating chamber is closed and, therefore, they are provided with a hatch, obtained on the granulating chamber, so as to allow an operator to access thereinto to perform the cleaning and maintenance operations.

However, the apparatuses of the type described above have some drawbacks known to the person skilled in the art.

First of all, the hatches are small and therefore access thereto is very uncomfortable and, at the same time, the size of the operator designated to perform the cleaning and/or maintenance operations of the granulating chamber, and of the components enclosed therein, must be compatible with that of the hatch.

Furthermore, the space inside the granulating chamber is rather narrow. Therefore, the operator finds it very difficult to move within the chamber, exposing the operator to potential accidents and therefore extending the times required for the cleaning and maintenance operations, and, as a result, machine downtime.

Therefore, it is advisable to provide a granulating apparatus for the agglomeration of granules which allows an operator to access into the granulating chamber quickly, comfortably and safely so as to quicken the granulating chamber maintenance and/or cleaning operations.

### Objects and advantages of the invention

An object of the present invention is to improve the current granulating apparatuses for the agglomeration of granules.

In particular, it is desired to provide a granulating apparatus for producing granules by agglomeration of powder material which allows an operator to access into the granulating chamber quickly, comfortably and safely.

An advantage of the invention lies in reducing machine downtime due to the cleaning and maintenance operations of the granulating chamber, and of the components enclosed therein, of a granulating apparatus.

### Brief description of the invention

The objects and advantages listed above and still others are attained by means of a granulating apparatus for the agglomeration of granules as defined in the attached claims.

### Brief description of the drawings

The invention will be better understood and implemented with reference to the attached drawings which show an exemplifying and non-limiting embodiment, thereof, wherein:
Fig.1 is a lateral view of a granulating apparatus according to the invention in a first position;
Fig.2 is a lateral view of the granulating apparatus of Fig. 1 in a second position;
Fig.3 is a longitudinal cross-section of the granulating apparatus of Fig.1;
la Fig.4 is a rear view of the granulating apparatus of Fig.1.

### Detailed description of the invention

The general characteristics of the present invention will be shown below through the exemplifying and non-limiting embodiment of the attached figures.

With reference to the attached figures, disclosed below is a granulating apparatus 10 for producing granules by agglomeration of powder material, in particular for producing ceramic microgranules used for forming ceramic tiles.

The granulating apparatus 10 comprises a drum 12, which extends along a horizontal axis X and can be driven in rotation therearound, a first wall 13 and a second wall 14. In the embodiment of the attached figures, the drum 12 is a hollow cylinder whose symmetry axis coincides with the horizontal axis X, while the first wall 13 and the second wall 14 substantially have a cylindrical symmetry around the aforementioned horizontal axis X.

In particular, the second wall 14 is arranged at a second end 12" of the drum and it is fixed with respect to the rotation of the drum 12; differently, the first wall 13 is movable along the aforementioned horizontal axis X, with respect to the drum 12, between a working position PL and a cleaning position PP.

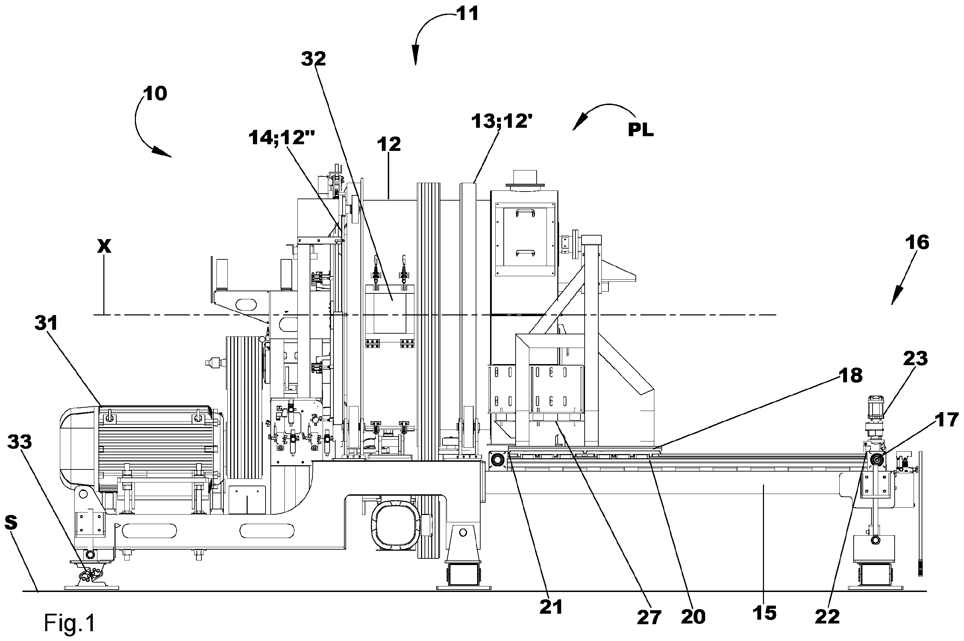

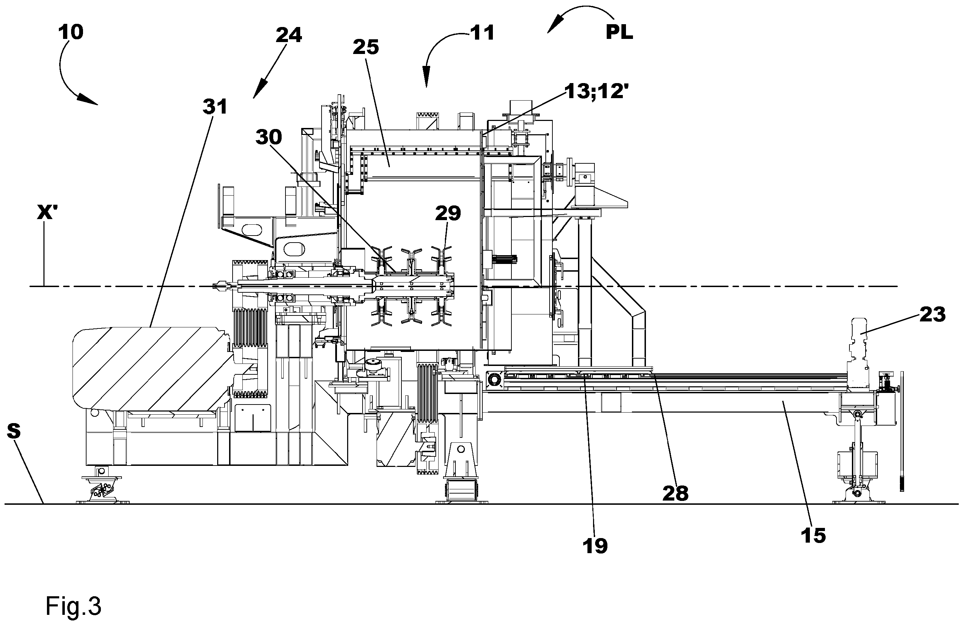

As shown in Figs.1 and 3, in the aforementioned working position PL, the first wall 13 is arranged, fixedly with respect to the rotation of the drum 12, at a first end 12' of the drum 12; in this position, the first wall 13, the drum 12 and the second wall 14 define a granulating chamber 11.

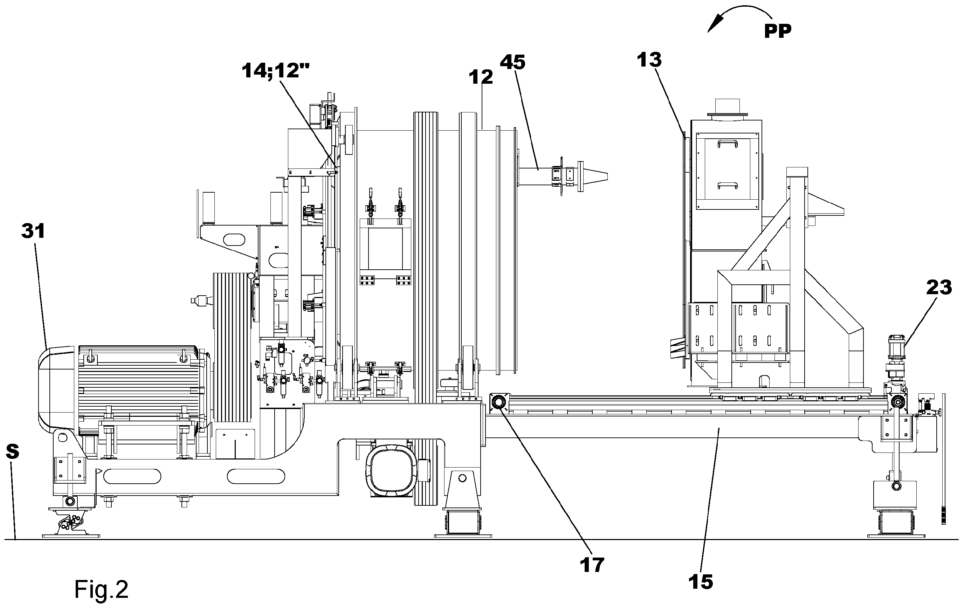

On the contrary, in the cleaning position PP (Fig.2), the first wall 13 is far from the drum 12, therefore allowing access into the granulating chamber 11.

Still with reference to Fig.3, the granulating apparatus 10 also comprises a dispersing assembly 24, which is provided with a dispersion bar element 30 and with a dispersion motor 31 suitable to drive the dispersion bar element 30 in rotation. In particular, the dispersion bar element 30 is driven in rotation around a rotation axis X' substantially parallel to the horizontal axis X.

Furthermore, the dispersing assembly 24 comprises at least one stirring fin 29, that is at least one element which projects radially with respect to the rotation axis X' of the dispersing bar element 30. The at least one stirring fin 29 may for example be a stirring spatula and/or a stirring blade.

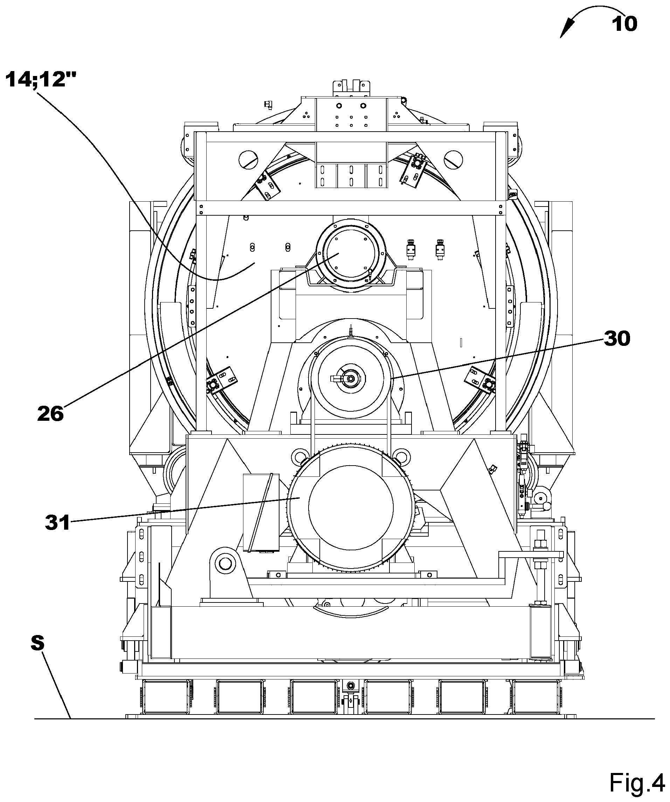

As shown in Fig.4, the second wall 14 is an entrance wall: that is, the second wall 14 is provided with an inlet opening 26, obtained thereon, for the powder material, for example a mixture of low moisture content powder ceramic raw materials. The second wall 14 is traversed by the dispersion bar element 30. A packing ensures the sealing between the drum 12 and the second wall 14.

On the contrary, the first wall 13, with reference to Fig.1, is an outlet wall: that is, the first wall 13 is provided with an outlet opening 27 for the agglomerated material.

Furthermore, the drum 12 has an inspection opening 32 suitable to allow an operator to visually check the granulating chamber 11 from the exterior.

With reference to Figs.1-3, the granulating apparatus 10 further comprises a support structure 15 in contact with, and fixed with reference to, a resting surface S on which the granulating apparatus 10 is arranged in use.

The second wall 14, the dispersing assembly 24 and the drum 12 are mounted on said support structure 15. In addition, the support structure 15 supports a movement unit 16 (Fig.1) arranged so as to slide the first wall 13 on the support structure 15 along the horizontal axis X.

In detail, the movement unit 16 comprises a frame 18, to which the first wall 13 is fixed, and an actuator 23 suitable to move the frame 18 along guides 20 positioned on the support structure 15 and parallel to the horizontal axis X. The frame 18, in particular, is provided with slides 19 (Fig.3) for the sliding along the aforementioned guides 20.

In the exemplifying embodiment of the attached figures, and in particular with reference to Figs.1-3, the coupling between the actuator 23 and the frame 18 is obtained by means of movement belts 28 parallel to the horizontal axis X and driven in rotation around respective pulleys 17. In particular, the frame 18 is coupled to the movement belts 28 using the slides 19, which are engaged on the movement belts 28.

The actuator 23 is chosen from a group comprising electric rotating actuators and hydraulic rotating actuators.

The support structure 15 is further provided with end stroke elements 21,22, which are positioned at two end positions of the frame 18 along the guides 20.

The two end positions respectively correspond to the working position PL and to the cleaning position PP of the first wall 13.

As shown in Fig.3, the granulating apparatus 10 also comprising a fluid dispensing element 25 arranged to dispense a fluid, for example by spraying, on the powder material; the fluid dispensing element 25 is fitted to the second wall 14.

The fluid dispensing element 25 is positioned, in particular, above the inlet opening 26 and it may include, for example, nozzles (not shown) supplied by one or more ducts and configured to dispense a wet mixture, for example water or slip, inside the granulating chamber 11. In detail, the nozzles may dispense the wet mixture simultaneously or they may be suitable to be activated selectively.

Furthermore, the granulating apparatus 10 is provided with a scraper 45, shown in Fig.2, suitable for scraping the interior of the granulating chamber 11.

Lastly, as shown in Fig.1, the granulating apparatus 10 includes damping elements 33 for damping the vibrations produced during the rotation of the drum 12 and of the dispersion bar element 30.

Briefly described hereinafter is the working of the granulating apparatus 10 and the operation for moving the first wall 13 from the working position PL to the cleaning position PP (and vice versa).

Therefore, let us consider the configuration in which the first wall 13 is located in the aforementioned working position PL.

In this configuration, the drum 12 is driven in rotation around the horizontal axis X, for example at a speed comprised between 5 and 25 revolutions/min, the powder material to be agglomerated is supplied to the granulating chamber 11 through the inlet opening 26 and the fluid dispensing element 25 dispenses the wet mixture.

The rotation of the drum 12 induces the powder material to roll on itself, this allowing the formation of agglomerates and, in particular, allowing the mixing of the materials contained in the granulating chamber 11.

Due to the force of gravity, the powder material introduced into the granulating chamber 11 tends to accumulate in the lower part thereof forming a powder bed; however, it is clear that the shape of the powder bed is strictly related to the rotation direction (clockwise or anticlockwise) of the drum 12.

In the meantime, the dispersion bar element 30 is driven in rotation according to a direction opposite to the one of the drum 12. In particular, the dispersion bar element 30 has two functions: as a matter of fact, besides dispersing the ultra-fine particles so as to facilitate the agglomeration thereof, it also crushes the larger agglomerates so as to limit the size thereof above.

Furthermore, the rotation of the dispersion bar element 30 is set so that the material is not projected against the fluid dispensing element 25 so as to reduce the risk of formation of crusts on the fluid dispensing element 25 which would affect the operation thereof.

After entirely traversing the granulating chamber 11, the agglomerated material is discharged through the outlet opening 27.

Whenever there arises the need to perform the cleaning and/or maintenance operations of the granulating chamber 11, and of the components enclosed therein, the rotation of the drum 12 and of the dispersion bar element 30 is stopped and the supply of powder material to be agglomerated is interrupted.

Subsequently, the actuator 23 slides the frame 18 along the guides 20 from the end position corresponding to the working position PL until the end position corresponding to the cleaning position PP is reached, therefore making the granulating chamber 11 accessible.

Once through with the cleaning and/or maintenance operations required, the actuator 23 slides the frame 18 along the guides 20 in the opposite direction, that is from the end position corresponding to the cleaning position PP to the end position corresponding to the working position PL. At this point, the granulating apparatus 10 is ready to resume operating.

In the light of the above, the granulating apparatus 10 attains all intended objects by overcoming the drawbacks of the prior art.

In particular, the granulating apparatus according to the present invention allows an operator to access into the granulating chamber quickly, comfortably and safely.

Therefore, owing to the present invention, machine downtime due to the cleaning and maintenance operations of a granulating apparatus, are reduced, thus increasing the efficiency of the system.

The present invention may be applied in the ceramic industry, as well as in other industries such as for example in the production of fertilizers, pet-food, etcetera.

Variants and/or additions to what is disclosed above and illustrated in the attached drawings are possible.

## Claims

1. Granulating apparatus (10) for producing granules by agglomeration of powder material comprising a drum (12) extending along a horizontal axis (X) and actuatable in rotation around said horizontal axis (X), a first wall (13) and a second wall (14), said second wall (14) being arranged at a second end (12") of said drum (12) and being fixed with respect to the rotation of said drum (12), **characterised in that** said first wall (13) is movable along said horizontal axis (X), with respect to said drum (12), between a working position (PL), in which said first wall (13) is arranged, in a fixed manner with respect to the rotation of said drum (12), at a first end (12') of said drum (12), said first wall (13), said drum (12) and said second wall (14) thus defining a granulating chamber (11), and a cleaning position (PP), in which said first wall (13) is far from said drum (12), thus allowing access into said granulating chamber (11).

2. Granulating apparatus (10) according to claim 1, wherein said second wall (14) is an entrance wall provided with an inlet opening (26) for the entry of said powder material into said granulating chamber (11), and wherein said first wall (13) is an outlet wall provided with an outlet opening (27) for the exit of agglomerated material from said granulating chamber (11).

3. Granulating apparatus (10) according to claim 1 or 2, and further comprising a dispersing assembly (24) provided with a dispersion bar element (30) and with a dispersion motor (31) suitable for driving said dispersion bar element (30) in rotation, wherein said second wall (14) is traversed by said dispersion bar element (30).

4. Granulating apparatus (10) according to the preceding claim, comprising a support structure (15) in contact with, and fixed with respect to, a resting surface (S) on which, in use, said granulating apparatus (10) is arranged, said second wall (14), said drum (12) and said dispersing assembly (24) being mounted on said support structure (15), and wherein said support structure (15) supports a movement unit (16) arranged for sliding said first wall (13) on said support structure (15) parallel to said horizontal axis (X).

5. Granulating apparatus (10) according to the preceding claim, wherein said movement unit (16) comprises a frame (18), to which said first wall (13) is fixed, and further comprising an actuator (23) suitable for moving said frame (18) along guides (20) positioned on said support structure (15) and parallel to said horizontal axis (X), said frame (18) being further provided with slides (19) for sliding along said guides (20).

6. Granulating apparatus (10) according to the preceding claim, wherein said actuator (23) is chosen from a group comprising electric rotating actuators and hydraulic rotating actuators, said actuator (23) being coupled with said frame (18) by movement belts (28) which are parallel to said horizontal axis (X) and drivable in rotation around respective pulleys (17).

7. Granulating apparatus (10) according to the preceding claim, wherein said slides (19) are engaged on said movement belts (28).

8. Granulating apparatus (10) according to any one of claims 5 to 7, wherein said support structure (15) is provided with end stroke elements (21,22), said end stroke elements (21,22) being positioned at two end positions of said frame (18) along said guides (20), said two end positions respectively corresponding to said working position (PL) and said cleaning position (PP).

9. Granulating apparatus (10) according to any one of the preceding claims, comprising a fluid dispensing element (25) arranged to dispense fluid on said powder material, said fluid dispensing element (25) being fitted to said second wall (14).

10. Granulating apparatus (10) according to any one of the preceding claims, wherein said drum (12) has an inspection opening (32) suitable for enabling an operator to visually check said granulating chamber (11) from the exterior.

11. Granulating apparatus (10) according to any one of the preceding claims, comprising damping elements (33) for damping the vibrations produced during the rotation of said drum (12).
